# EUROPEAN PATENT APPLICATION

(11) **EP 3 839 871 A1**
(43) Date of publication of application: **23.06.2021**
(21) Application number: 19837426.6
(22) Date of filing: 04.06.2019
(51) Int. Cl.: G06Q 50/02, A01G 7/00, G06Q 10/06

(54) **INFORMATION PROCESSING DEVICE AND PROGRAM**

(30) Priority: 20.07.2018 JP 2018136295
(71) Applicant: Bayer CropScience K.K., Tokyo 100-8268 (JP)
(72) Inventor: ITO, Satoshi, Tokyo 150-8360 (JP); MORI, Asako, Tokyo 150-8360 (JP)
(74) Representative: BIP Patents
(86) International application number: PCT/JP2019/022085
(87) International publication number: WO 2020/017171

(57) **Abstract**

In the present invention, the burden of a user is reduced regarding the estimation of a damage occurrence risk caused by a phenomenon of interest. Provided is an information processing device provided with: a storage unit that, regarding a plurality of drugs, stores drug information indicating the respective effects of the drugs over time obtained by use of the drugs; a specification unit that, when a designated drug is used at a designated time, specifies an effect of the designated drug with respect to a phenomenon of interest at an object time, on the basis of the drug information about the designated drug stored in the storage unit; and an estimation unit that, on the basis of the effect of the designated drug specified by the specification unit, estimates the damage occurrence risk caused by the phenomenon of interest at the object time.

## Description

### Technical field

The present invention relates to an information processing device and a program.

### Background art

In recent years, research and development has been conducted into techniques for protecting crops from pest damage using information communication technology. More specifically, there are techniques for observing the crop environment using a sensor, and presenting the pest damage occurrence risk to a user using the observation results obtained from the sensor. Pest damage typically lowers the yield and the quality of the crop, but can be suppressed by dispersing agricultural chemicals. The user can thus effectively reduce crop damage due to pest damage by dispersing agricultural chemicals on the basis of the presented pest damage occurrence risk.

Patent literature article 1 and patent literature article 2, for example, disclose techniques for supporting agricultural work employing agricultural chemicals. More specifically, patent literature article 1 discloses a technique for calculating an agricultural chemical dispersion plan for maximizing the crop yield. Further, patent literature article 2 discloses a technique for calculating the date for dispersing an agricultural chemical, in consideration of the "number of days before harvesting".

### Citation List

### Patent Literature

Patent literature article 1: Japanese Unexamined Patent Publication H11-313594
Patent literature article 2: Republished Japanese Patent 2013/088538

### Summary of Invention

### Technical Problem

However, there is no known system that takes into consideration drug effects obtained by employing drugs in order to estimate the damage occurrence risk due to infection of the crop by pests. The user can determine the actual damage occurrence risk due to a presented phenomenon of interest, from the damage occurrence risk due to the phenomenon of interest, such as an infection, and the history of drug usage, for example, but this determination places a heavy burden on the user.

Accordingly, the present invention takes account of the abovementioned problems, and the objective of the present invention is to provide a novel and improved information processing device and program capable of alleviating the burden on the user in relation to estimating the damage occurrence risk due to a phenomenon of interest.

### Solution to Problem

In order to resolve this problem, according to an aspect of the present invention, there is provided an information processing device provided with: a storage unit which, for a plurality of drugs, stores drug information indicating the drug effects over time that are obtained by using the drugs; an identifying unit for identifying the effect of a specified drug on a phenomenon of interest at a target time, if the specified drug is used at a specified time, on the basis of the drug information for the specified drug that is stored in the storage unit; and an estimating unit for estimating the damage occurrence risk due to the phenomenon of interest at the target time, on the basis of the effect of the specified drug identified by the identifying unit.

Further, in order to resolve this problem, according to another aspect of the present invention, there is provided a program for causing a computer to function as: an identifying unit for identifying the effect of a specified drug with respect to a phenomenon of interest at a target time, if the specified drug is used at a specified time, on the basis of the drug information that corresponds to the specified drug and that indicates the drug effects over time that are obtained by using the specified drug; and an estimating unit for estimating the damage occurrence risk due to the phenomenon of interest at the target time, on the basis of the effect of the specified drug identified by the identifying unit.

Further, in order to resolve this problem, according to another aspect of the present invention, there is provided an information processing device provided with: a storage unit which, for a plurality of drugs, stores drug information indicating the drug effects over time that are obtained by using the drugs; an identifying unit for identifying, on the basis of a drug usage record indicating which drug was used and when, and the drug information relating to the drug, the effect of the drug with respect to a phenomenon of interest at a target time; and a learning unit for generating an estimation model for estimating the damage occurrence risk due to the phenomenon of interest, by means of machine learning employing the effect of the drug identified by the identifying unit, and a record of damage that occurred as a result of the phenomenon of interest at the target time.

Further, in order to resolve this problem, according to another aspect of the present invention, there is provided a program for causing a computer to function as: an identifying unit for identifying, on the basis of a drug usage record indicating which drug was used and when, and drug information which relates to the drug and which indicates the drug effects over time that are obtained by using the drug, the effect of the drug with respect to a phenomenon of interest at a target time; and a learning unit for generating an estimation model for estimating the damage occurrence risk due to the phenomenon of interest, by means of machine learning employing the effect of the drug identified by the identifying unit, and a record of damage that occurred as a result of the phenomenon of interest at the target time.

By means of the abovementioned configurations, the effect of a drug is identified, and the damage occurrence risk due to a phenomenon of interest is estimated on the basis of the identified effect.

### Advantageous Effects of Invention

As described hereinabove, the present invention makes it possible to alleviate the burden on the user with regard to estimating the damage occurrence risk due to the phenomenon of interest.

### Brief Description of Drawings

Figure 1 is a conceptual diagram illustrating the concept of an embodiment of the present invention.
Figure 2 is a block diagram illustrating the function and configuration of an information processing system according to the same embodiment.
Figure 3 is a conceptual diagram illustrating the effect of a drug.
Figure 4 is a drawing illustrating an example in which the effects of drugs have been identified, in the information processing system according to the same embodiment.
Figure 5 is a drawing illustrating an example in which the damage occurrence risk has been estimated, in the information processing system according to the same embodiment.
Figure 6 is a flowchart illustrating an example of the operation flow in the information processing system according to the same embodiment.
Figure 7 is a flowchart illustrating an example of the operation flow in the information processing system according to the same embodiment.
Figure 8 is a drawing illustrating an example of the hardware configuration of the information processing system according to the same embodiment.

### Description of Embodiment

A preferred embodiment of the present invention will now be described in detail with reference to the accompanying drawings. It should be noted that in the specification and the figures, duplicate descriptions are omitted by using the same reference signs to denote constituent elements having substantially the same functional configuration.

### 1. Technical Summary

The present invention relates to a technique with which it is possible to alleviate the burden on a user with regard to estimating the damage occurrence risk due to a phenomenon of interest. A description will now be given of an example in which the present invention is employed to alleviate the burden on a user (for example, a farmer) who is cultivating a crop. In particular, in the present embodiment the damage occurrence risk based on the effect of a drug (for example, an agricultural chemical) is presented, indicating the possibility that the crop will be infected with a pest, and damage to the crop will subsequently arise. This makes it possible to alleviate the burden on a user who estimates, in his or her head, the damage occurrence risk with respect to the crop, taking into consideration the effect of the drug.

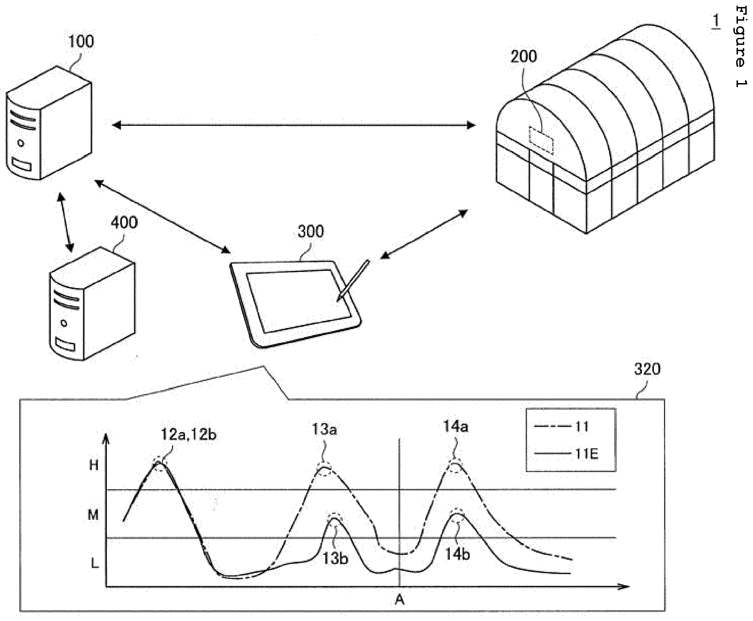

An information processing system 1 to which the present invention is applied will first be described with reference to Figure 1. The information processing system 1 is provided with an information processing device 100, a cultivation sensor 200, an information processing terminal 300, and a weather server 400.

In the information processing terminal 300, a graph is displayed on a display unit 320, for example. In the graph displayed on the display unit 320, the horizontal axis represents time, and the vertical axis represents a degree of damage occurrence risk indicating the possibility that a crop will be infected with a pest, and damage to the crop will subsequently arise as a result of the infection. The graph illustrates schematically a pre-application damage occurrence risk 11 before application of the present invention, in which the effect of an agricultural chemical is not considered, and a post-application damage occurrence risk 11E, in which the present invention has been applied and the effect of an agricultural chemical is considered.

In the graph, the damage occurrence risk indicated on the vertical axis is shown divided into three levels, namely high risk H, medium risk M, and low risk L. It should be noted that the layout for presenting the damage occurrence risk on the display unit 320 is not limited to this example, and it is sufficient that the user is able to recognize increases and decreases in the damage occurrence risk, and the risk level.

The pre-application damage occurrence risk 11 has a maximum point 12a, a maximum point 13a, and a maximum point 14a as time passes, and the post-application damage occurrence risk 11E has a maximum point 12b, a maximum point 13b, and a maximum point 14b. Further, the graph indicates an agricultural chemical dispersion date A, as the date specified for agricultural chemical dispersion.

First, the pre-application damage occurrence risk 11 indicates high risk H at the maximum point 12a, and a gradual decrease in the damage occurrence risk, decreasing to medium risk M and low risk L. The damage occurrence risk subsequently becomes high risk H toward the maximum point 13a. The damage occurrence risk then decreases again from high risk H to medium risk M and low risk L, and once again rises to high risk H toward the maximum point 14a.

Meanwhile, the post-application damage occurrence risk 11E indicates that, in the same way as with the pre-application damage occurrence risk 11, the damage occurrence risk is high risk H at the maximum point 12a, and decreases gradually to medium risk M and low risk L. Although the damage occurrence risk subsequently rises, medium risk M is exhibited in the vicinity of the next maximum point 13b. Although the damage occurrence risk then falls again to low risk L and then rises, medium risk M is exhibited at the next maximum point 14b, unlike in the pre-application damage occurrence risk 11.

The difference between the pre-application damage occurrence risk 11 and the post-application damage occurrence risk 11E is due to the fact that the effect of the agricultural chemical dispersed on the agricultural chemical dispersion date A is reflected in the estimate of the damage occurrence risk. In this graph, at the maximum point 13a and the maximum point 13b close to the agricultural chemical dispersion date A, the maximum point 13b of the post-application damage occurrence risk 11E is lower than the maximum point 13a of the pre-application damage occurrence risk 11, and the maximum point 13b indicates medium risk M. Similarly, at the maximum point 14a and the maximum point 14b close to the agricultural chemical dispersion date A, the maximum point 14b of the post-application damage occurrence risk 11E is lower than the maximum point 14a of the pre-application damage occurrence risk 11, and the maximum point 14b indicates medium risk M. This indicates that the damage occurrence risk has decreased as a result of the agricultural chemical dispersion.

Meanwhile, at the maximum point 12a and the maximum point 12b far from the agricultural chemical dispersion date A, there is no difference between the damage occurrence risk in the pre-application damage occurrence risk 11 and the post-application damage occurrence risk 11E. This indicates that, even if the damage occurrence risk is estimated taking into account the effect of the agricultural chemical, the effect of the agricultural chemical is low at a date and time far from the agricultural chemical dispersion date A, and does not impact the damage occurrence risk.

As described above, in the present invention the effect of the agricultural chemical is reflected in the estimate of the damage occurrence risk. This makes it possible to alleviate the burden on the user who has previously determined, in his or her head, the next agricultural chemical dispersion date, for example, by assuming the damage occurrence risk due to infection of the crop with pest, taking into account the effect of the agricultural chemical.

The processing performed by the information processing device 100, the cultivation sensor 200, the information processing terminal 300, and the weather server 400 to realize the display of the damage occurrence risk illustrated in Figure 1, and the functional configurations thereof, for example, will now be described in detail.

### 2. Functional configuration of information processing system

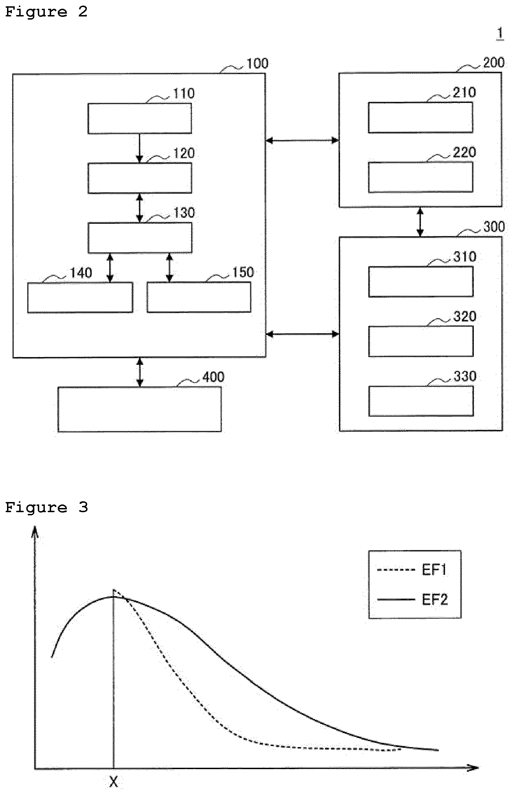

The functional configuration of the information processing system 1 will be described with reference to Figure 2. The information processing system 1 is provided with the information processing device 100, the cultivation sensor 200, the information processing terminal 300, and the weather server 400.

The information processing device 100 has the function of identifying the effect of the agricultural chemical and estimating the damage occurrence risk on the basis of drug information acquired by the information processing device 100. Besides the drug information, environmental information output from the cultivation sensor 200, the information processing terminal 300, and the weather server 400 can also be used to estimate the damage occurrence risk. The cultivation sensor and the like for acquiring information to be used to estimate the damage occurrence risk will first be described.

### Cultivation sensor

The cultivation sensor 200 has the function of acquiring environmental information relating to the space in which the crop is being cultivated, and outputting the environmental information to the information processing device 100. The cultivation sensor 200 is provided with a sensor unit 210 for sensing the environmental information, and a communication unit 220 for outputting the sensed environmental information.

### Sensor unit

The sensor unit 210 senses environmental information relating to the space in which the crop is being cultivated. The space in which the crop is being cultivated may be the space surrounding the place in which the crop is being cultivated, and may, for example, be an agricultural facility for carrying out crop cultivation such as a vinyl house. Provided that the place is the place in which the crop is being cultivated, the space does not need to be enclosed, and may be an open space such as a field or a paddy field.

The sensor unit 210 may, for example, consist of a thermometer, a hygrometer, a solar irradiance meter, a carbon dioxide concentration meter, or a moisture meter for measuring the moisture content of soil.

By means of the sensor unit 210, the cultivation sensor 200 acquires the temperature, humidity, solar irradiance, and carbon dioxide concentration in the ambient environment of the crop, and the moisture content of the soil in which the crop is being cultivated, for example, as the environmental information.

The environmental information acquired by the cultivation sensor 200 includes not only current values, but also historical values. The historical values include the environmental information relating to a period during which the effect of the agricultural chemical was sustained when the agricultural chemical was used in the past, for example. In addition, the environmental information also includes predicted values in the future.

### Communication unit 220

The communication unit 220 has the function of outputting the environmental information acquired by the sensor unit 210 to the information processing device 100 or to the information processing terminal 300. Further, the communication unit 220 may selectively output environmental information to the information processing device 100 or the information processing terminal 300 from among the environmental information acquired by the sensor unit 210, in response to an instruction from the information processing device 100 or the information processing terminal 300.

### Weather server

The weather server 400 has the function of outputting environmental information relating to the weather in the region in which the crop is being cultivated. Temperature, humidity, solar irradiance and rainfall can be cited as examples of the environmental information output by the weather server 400. The weather server 400 may selectively output environmental information to be used by the information processing device 100, when requested by the information processing device 100. The environmental information output by the weather server 400 may include historical values, such as a weather log, or current values or predicted values, in the same way as with the cultivation sensor 200.

### Information processing terminal

The information processing terminal 300 has the function of presenting the damage occurrence risk estimated by the information processing device 100 to the user. The information processing terminal 300 is provided with a communication unit 310, a display unit 320, and an input unit 330.

### Communication unit

The communication unit 310 has the function of acquiring the damage occurrence risk estimated by the information processing device 100, discussed hereinafter, and outputting the same to the display unit 320. The communication unit 310 may communicate when the damage occurrence risk has been output by the information processing device 100, or may communicate constantly. Further, the damage occurrence risk may be estimated in the information processing device 100 and presented using the information processing terminal 300 when the user, for example, sends an instruction by way of the information processing terminal 300 for the damage occurrence risk to be estimated.

### Display unit

The display unit 320 has the function of outputting the information acquired by the communication unit 310, For example, the display unit 320 presents the damage occurrence risk estimated by the information processing device 100 to the user.

### Input unit

The input unit 330 has the function of accepting inputs of various information by the user, for example, to the information processing system 1. The various information includes, for example, cultivation information that is not acquired by the cultivation sensor 200 or the weather server 400, more specifically information relating to the crop cultivation status. The crop cultivation status includes information such as the crop variety, the altitude of the location in which the crop is being cultivated, the soil type, the nutritional condition of the soil, the date and time at which the crop was sown, the planting date and time, the leaf picking status of the crop, the history of agricultural chemical dispersal, the status of the residual effect of agricultural chemicals, the status of weed removal, the tree-vigor status, and the growth stage of the crop, for example.

### Information processing device

The information processing device 100 is provided with an acquiring unit 110, a storage unit 120, an identifying unit 130, a machine learning unit 140, and an estimating unit 150. The information processing device 100 has the function of identifying the agricultural chemical effect using the drug information, and estimating the damage occurrence risk. The components of the information processing device 100 and the method by which the information processing device 100 estimates the damage occurrence risk will be described with reference to Figure 2 to Figure 5. It should be noted that the information processing device 100 illustrates an example in which all the component parts are included in the information processing device 100, but the functional configuration of each part contained in the information processing device 100 may be distributed between a plurality of information processing devices, provided that all the functions of the information processing system 1 are realized. For example, the functional configuration of the information processing device 100 may be realized by arranging that one information processing device functions as the storage unit 120, the identifying unit 130, and the machine learning unit 140, and an information processing device different from said one information processing device functions as the storage unit 120, the identifying unit 130, and the estimating unit 150.

### Acquiring unit

The acquiring unit 110 has the function of acquiring the drug information, and outputting the same to the storage unit 120. The drug information includes information indicating the drug effects over time that are obtained by using the drugs. Further, the drug information may be information indicating a preventative effect or a treatment effect on pests with respect to the crop, for example.

The drug information will be described with reference to Figure 3. Figure 3 is a conceptual diagram illustrating the effect over time of two types of agricultural chemical, namely agricultural chemical EF1 and agricultural chemical EF2. In Figure 3, the horizontal axis represents time, and the vertical axis represents the agricultural chemical effect. For example, agricultural chemical EF1 has a pest preventative effect, and agricultural chemical EF2 has a treatment effect.

Figure 3 illustrates the agricultural chemical effects of the agricultural chemical EF1 and the agricultural chemical EF2, and the agricultural chemical dispersion date X. The agricultural chemical EF1 functions as a preventative agent, exhibiting a high pest preventative effect from the agricultural chemical dispersion date X, and having a varying effect over time such that the preventative effect decreases gradually. The agricultural chemical EF2 functions as a treatment agent, exhibiting an effect that varies over time, the pest treatment effect having the maximum effect on the agricultural chemical dispersion date X, and the treatment effect gradually decreasing, and also has a treatment effect with respect to pest infection prior to the agricultural chemical dispersion date X. As described above, the drug information also indicates the magnitude of the drug effect at times before and after the drug is used. It should be noted that the treatment effect before the agricultural chemical dispersion date X represents the treatment effect with respect to the disease for cases in which infection with the disease has occurred but has not yet resulted in disease onset or damage.

The acquiring unit 110 has the function of acquiring various types of information to be used to estimate the damage occurrence risk, besides the drug information discussed hereinabove. More specifically, the acquiring unit 110 may acquire a pest damage occurrence record.

The pest damage occurrence record may include information indicating whether disease onset due to the pest has occurred, and may include information relating to the onset date and time at which the onset of pest damage due to the pest, for example, occurred in the crop in the pest. Disease onset refers to the end of the incubation period after the crop has been infected with the pest, when the symptoms of the infection have developed or damage to the crop has occurred. For example, if there is a sensor or the like to observe the growth status of the crop, the disease onset may be found on the basis of information detected by the sensor or the like, or the disease onset in the crop may be recognized when the user observes the crop.

The pest damage occurrence record additionally includes information relating to the type of pest that caused damage to the crop. More specifically, said information includes information relating to microbial diseases, pest diseases, physiological disorders, and physiological disorders due to weeds, for example. Further, information relating to additional details of each type is also included, including, for example in the case of a microbial disease, information relating to the type of the disease, such as botrytis cinerea or leaf mold.

The acquiring unit 110 also has the function of acquiring the environmental information and the cultivation information. For example, the acquiring unit 110 acquires the environmental information and the cultivation information acquired by the cultivation sensor 200, the information processing terminal 300, and the weather server 400.

### Storage unit

The storage unit 120 has the function of storing the drug information acquired by the acquiring unit 110, for a plurality of drugs. Further, the storage unit 120 also has the function of storing various types of information obtained from the cultivation sensor 200, the information processing terminal 300, and the weather server 400. Various types of information stored in the storage unit 120, including the drug information, are output from the storage unit 120 as necessary and are used by the information processing device 100 or the information processing terminal 300.

### Identifying unit

The identifying unit 130 has the function of using the drug information output from the storage unit 120 to identify, on the basis of the drug information, the effect of a specified drug with respect to a phenomenon of interest at a target time when the specified drug is used at a specified time. The identifying unit 130 also has the function of outputting the identified drug effect to the machine learning unit 140 or the estimating unit 150. In this description, infection with a pest is described as one example of the phenomenon of interest, the drug is described as an agricultural chemical, a specified date for dispersing the agricultural chemical, specified by the user, is described as the specified time, and a target date on which the damage occurrence risk is to be estimated is described as the target time.

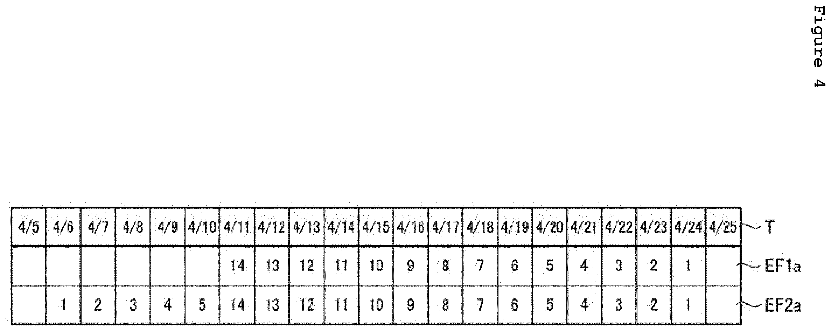

Identification of the agricultural chemical effect by the identifying unit 130 will be described specifically, with reference to Figure 4. Figure 4 shows, from the top row, the date and time T, the effect EF1a of the agricultural chemical EF1, and the effect EF2a of the agricultural chemical EF2. The date and time T indicates the period from April 5th until April 25th. In Figure 4, the specified date for agricultural chemical dispersion is specified by the user as April 10th. Further, the target dates for estimating the damage occurrence risk are from April 5th to April 25th. The specified date may be a historical agricultural chemical dispersion date, or may be a date planned for the agricultural chemical dispersion.

On the basis of the drug information, the identifying unit 130 identifies the effect of the agricultural chemical at the target date if the agricultural chemical dispersion occurs on the specified date. In Figure 4, April 10th is the specified date. Here, the identifying unit 130 uses the drug information for the agricultural chemical EF1 and the agricultural chemical EF2, as illustrated in Figure 3, to quantitatively identify the effect EF1a of the agricultural chemical EF1 on April 11th as 14, and to quantitatively identify the effect EF2a of the agricultural chemical EF2 on April 11th as 14.

In relation to the agricultural chemical EF1, the identifying unit 130 sets April 10th, which is the specified date for agricultural chemical dispersion, as a reference, and identifies the effect EF1a of the agricultural chemical EF1, in which the preventative effect gradually decreases by 1 each day after the specified date from the numerical value 14. Since the agricultural chemical EF1 is a preventative agent, the probability of infection being prevented retroactively from the dispersion of the agricultural chemical is low, and thus the effect up to the specified date in the example in Figure 4 is considered to be 0.

Additionally, in relation to the agricultural chemical EF1, in the same way as with the agricultural chemical EF1, the identifying unit 130 sets April 10th, which is the specified date for agricultural chemical dispersion, as a reference, and quantitatively identifies the effect EF2a of the agricultural chemical EF2, in which the treatment effect gradually decreases by 1 each day after the specified date from the numerical value 14. Since the agricultural chemical EF2 is a treatment agent, there may be a treatment effect even before the specified date. In the example in Figure 4, the effect EF2a of the agricultural chemical EF2 is deemed to be a treatment effect of 5 on the specified date of April 10th, and the effect is quantitatively identified as being a treatment effect that reduces by 1 each day prior to the specified date. As described above, the identifying unit 130 quantitatively identifies the effects of the agricultural chemical EF1 and the agricultural chemical EF2 on the target date on which the damage occurrence risk is to be estimated, in accordance with the specified date of agricultural chemical dispersion. It should be noted that the maximum value of the agricultural chemical effect is illustrated as 14 by way of example, but the maximum value is not limited to this example, and the maximum value or the like may be modified in accordance with the characteristics of the agricultural chemical by applying a gradient to a quantified effect, for example.

Further, the identifying unit 130 may identify the effect EF1a of the agricultural chemical EF1 and the effect EF2a of the agricultural chemical EF2 by binary quantification. For example, a date on which the preventative effect of the agricultural chemical EF1 is recognized is quantified as 1, a date on which no preventative effect is recognized is quantified as 0, a date on which the treatment effect of the agricultural chemical EF2 is recognized is quantified as 1, and a date on which no treatment effect is recognized is quantified as 0. This makes it possible to reduce the processing load on the information processing device 100 for estimating the damage occurrence risk.

It should be noted that in the present embodiment, identification of the agricultural chemical effects relating to two types of agricultural chemical, namely agricultural chemical EF1 and agricultural chemical EF2, is described by way of example, but without limitation to this example, the identifying unit 130 may identify the agricultural chemical effect for each drug type or each chemical substance classification. The drug type may, for example, be a type that is classified in accordance with the impact that the agricultural chemical, such as a preventative agent or a treatment agent, has on the crop. Further, the chemical substance classification may be a classification in accordance with chemical substances included in the agricultural chemical. Further, the present embodiment illustrates an example in which the agricultural chemical effect is identified on the basis of known literature or the like, but without limitation to this example, the identification of the agricultural chemical effect may be derived by employing machine learning.

### Machine learning unit

The machine learning unit 140 has the function of building a damage occurrence risk model for use by the estimating unit 150. The machine learning unit 140 builds the damage occurrence risk model by performing machine learning using the agricultural chemical effect identified by the identifying unit 130, the agricultural chemical usage record and the pest damage occurrence record, and environmental information and cultivation information corresponding to the agricultural chemical usage record and the pest damage occurrence record.

The agricultural chemical usage record indicates the usage record when a specified agricultural chemical was used in the past. The usage record may include the usage record of the specified agricultural chemical for a plurality of farmers. Further, the usage record may include the date and time at which the specified agricultural chemical was dispersed, and the type, for example. The usage record may additionally include the type of the specified agricultural chemical, and component information relating to the agricultural chemical, for example.

The pest damage occurrence record includes a record of whether the onset of pest damage occurred in the crop on which the specified agricultural chemical was used, and includes information such as the onset date and time, and the type of pest.

The machine learning unit 140 uses the effect of the specified agricultural chemical on each date, identified on the basis of the usage record of the specified agricultural chemical, when building the damage occurrence risk model using the specified agricultural chemical usage record and the pest damage occurrence record. The effect of the specified agricultural chemical on each date is identified by the identifying unit 130. The machine learning unit 140 then builds the damage occurrence risk model by performing machine learning using the effect of the specified agricultural chemical on each date as input data, and using the pest damage occurrence record on each date as teacher data.

In addition, the mechanical learning 140 may perform the machine learning using the environmental information and the cultivation information, for example, as input data. Such a configuration makes it possible to build a more accurate damage occurrence risk model that takes into account the impact of the environmental information and the cultivation information, for example, on the damage occurrence risk, in addition to the effect of the agricultural chemical.

The machine learning unit 140 builds the damage occurrence risk model in this way, and outputs the same to the storage unit 120. The damage occurrence risk model stored in the storage unit 120 can be acquired and used, as appropriate, by the estimating unit 150. It should be noted that the mechanical learning 140 should be located within the information processing system, but is not limited to being disposed in the information processing device 100. For example, an information processing device containing the storage unit 120, the identifying unit 130, and the mechanical learning 140 may be formed in the information processing system.

### Estimating unit 150

The estimating unit 150 has the function of estimating the damage occurrence risk using the damage occurrence risk model built by the mechanical learning 140, on the basis of the agricultural chemical effect identified by the identifying unit 130.

More specifically, the estimating unit 150 acquires the damage occurrence risk model stored in the storage unit 120. The estimating unit 150 then outputs the damage occurrence risk for a target date by inputting the effect of the agricultural chemical on the target date, identified by the identifying unit 130, and the environmental information and the cultivation information on the target date, into the damage occurrence risk model. It should be noted that the estimating unit 150 should be located within the information processing system, but is not limited to being disposed in the information processing device 100. For example, the function of the estimating unit 150 may be realized by forming an information processing device containing the storage unit 120, the identifying unit 130, and the estimating unit 150 in the information processing system.

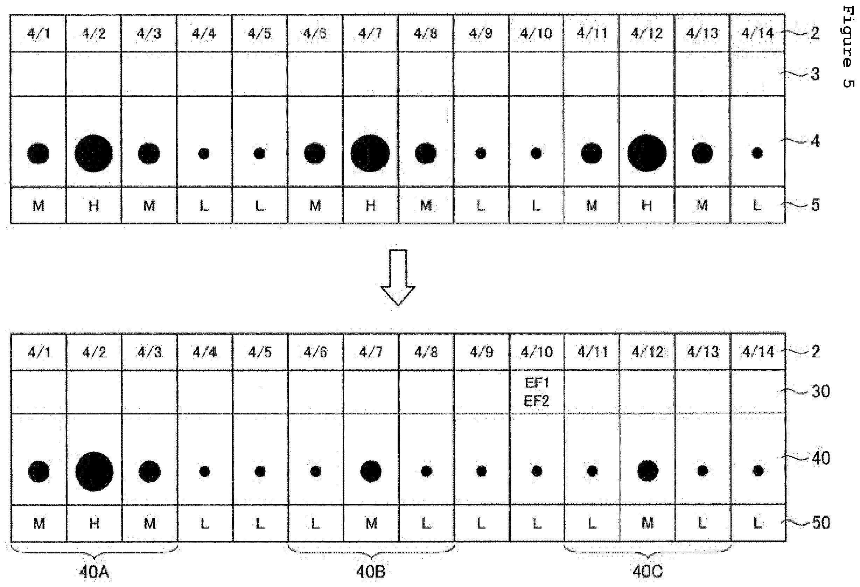

An example in which the estimating unit 150 estimates the damage occurrence risk using the damage occurrence risk model will be described with reference to Figure 5. The upper part of Figure 5 is an example in which the damage occurrence risk has been estimated without identifying the effect of the drugs, and the lower part of Figure 5 is an example in which the damage occurrence risk has been estimated by identifying the effect of the drugs.

The upper part of Figure 5 presents the date and time 2, the agricultural chemical dispersion date and time 3, a damage occurrence risk pictorial display 4, and a damage occurrence risk character display 5. Similarly, the lower part of Figure 5 presents the date and time 2, the agricultural chemical dispersion date and time 30, a damage occurrence risk pictorial display 40, and a damage occurrence risk character display 50. In Figure 5, the damage occurrence risk is estimated and presented for target dates from April 1st to April 14th, taking into account the effects of the agricultural chemical EF1 and the agricultural chemical EF2 identified by the identifying unit 130.

Agricultural chemical dispersion is not performed in the upper part of Figure 5, as indicated by the agricultural chemical dispersion date and time 3. The damage occurrence risk pictorial display 4 represents the magnitude of the damage occurrence risk in three levels by means of the size of black circles. The greater the size of the black circle, the higher the damage occurrence risk, and the smaller the size of the black circle, the lower the damage occurrence risk. For example, the damage occurrence risk on April 4th is a low risk, the damage occurrence risk on April 1st is a medium risk, and the damage occurrence risk on April 2nd is a high risk. Further, in the damage occurrence risk character display 5, the damage occurrence risk pictorial display 4 is notated using characters representing the magnitude of the damage occurrence risk in three levels. For example, the damage occurrence risk on April 4th is low risk L, the damage occurrence risk on April 1st is medium risk M, and the damage occurrence risk on April 2nd is high risk H. In this way, the damage occurrence risk may be presented to the user in various ways using characters or a pictorial display, for example.

In the lower part of Figure 5, dispersion of the agricultural chemical EF1 and the agricultural chemical EF2 is performed as indicated by the agricultural chemical dispersion date and time 30, and the situation resulting from the estimating unit 150 estimating the damage occurrence risk is represented in the same way as in the upper part of Figure 5.

The lower part of Figure 5 indicates a period 40A in which there is no change to the damage occurrence risk in the upper part of Figure 5, a damage occurrence risk period 40B reflecting the treatment effect of the agricultural chemicals prior to the agricultural chemical dispersion A, and a damage occurrence risk period 40C reflecting the preventative effect of the agricultural chemicals after the agricultural chemical dispersion A.

In the period 40A in which there is no change to the damage occurrence risk in the upper part of Figure 5, the identifying unit 130 identifies that no treatment effect can be seen, for example. There is consequently no difference in the damage occurrence risk, even if the effect of the agricultural chemicals is taken into account when estimating the damage occurrence risk.

Next, in the damage occurrence risk period 40B, the identifying unit 130 quantitatively identifies that a treatment effect can be seen, as in Figure 4, for example. The damage occurrence risk is consequently reduced in the damage occurrence risk period 40B before the specified date, reflecting the treatment effect of the agricultural chemical EF2.

Next, in the damage occurrence risk period 40C, the identifying unit 130 quantitatively identifies that a preventative effect can be seen, as in Figure 4, for example. The damage occurrence risk is consequently reduced in the damage occurrence risk period 40C after the specified date, reflecting the preventative effect of the agricultural chemical EF1.

### 3. Operation flow

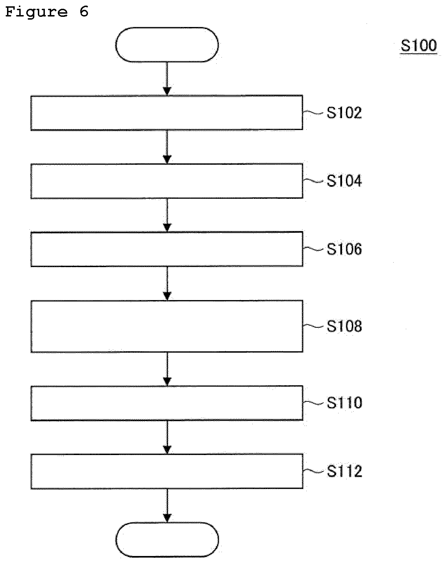

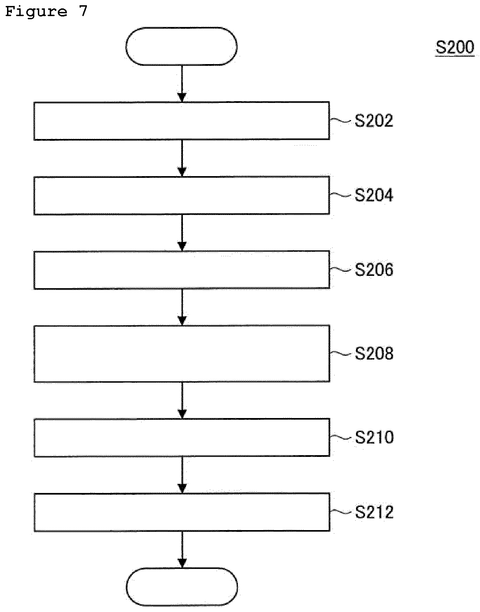

The functional configuration of the information processing system 1 has been described hereinabove. Next, the operation flow of the information processing system 1 will be described with reference to Figure 6 and Figure 7.

The information processing system 1 broadly performs two processing steps. That is, the information processing system first builds the damage occurrence risk model (S100), and then uses the built damage occurrence risk model to output the damage occurrence risk (S200). Each operation flow will now be described in detail.

### Building of damage occurrence risk model

When building the damage occurrence risk model, first the acquiring unit 110 of the information processing device 100 acquires the drug information (S102).

Next, the acquiring unit 110 acquires the agricultural chemical usage record and the pest damage occurrence record (S104).

Next, the acquiring unit 110 acquires the environmental information and the cultivation information corresponding to the pest damage occurrence record (S106).

Next, the identifying unit 130 uses the drug information acquired by the acquiring unit 110 to quantitatively identify the magnitude of the agricultural chemical effect on each date (S108).

Next, the machine learning unit 140 builds the damage occurrence risk model by performing machine learning using the agricultural chemical effect on each day, identified by the identifying unit 130, and the environmental information and the cultivation information on each day as input data, and using the pest damage occurrence record on each day as teacher data (S110) .

Finally, the damage occurrence risk model built by the machine learning unit 140 is stored in the storage unit 120 (S112).

### Estimation of damage occurrence risk using damage occurrence risk model

To estimate the damage occurrence risk using the damage occurrence risk model, the user or the like specifies, by means of the information processing terminal 300, the soil, the crop, and the type of pest for which the damage occurrence risk is to be estimated, and the target date on which to estimate the damage occurrence risk, for example (S202).

Next, the acquiring unit 110 acquires the environmental information and the cultivation information for the target date, and the specified date of the agricultural chemical dispersion (S204).

Next, the identifying unit 130 quantitatively identifies the agricultural chemical effect for the target date when the agricultural chemical dispersion is performed on the specified date, from the environmental information, the cultivation information, and the specified date of the agricultural chemical dispersion acquired by the acquiring unit 110 (S206).

Next, the estimating unit 150 acquires the damage occurrence risk model that has been stored in advance in the storage unit 120 (S208).

Next, the estimating unit 150 estimates the damage occurrence risk by inputting the agricultural chemical effect identified by the identifying unit 130, and the environmental information and the cultivation information into the damage occurrence risk model (S210) .

Next, the estimating unit 150 outputs the estimated damage occurrence risk (S212). The output destination is not limited to the information processing terminal 300, and there is no limitation provided that the output destination is a device capable of presenting the damage occurrence risk to the user.

As described hereinabove, the information processing system 1 builds the damage occurrence risk model and estimates the damage occurrence risk. In the information processing system 1, by performing processing to identify the effect of the agricultural chemical, from building the damage occurrence risk model to estimation, it is possible to estimate the damage occurrence risk taking into account the agricultural chemical effect. It should be noted that the description takes units of days as the unit for estimating the damage occurrence risk, but this example is not limiting, and estimation may be performed using hours as the units instead of days.

### 4. Hardware configuration example

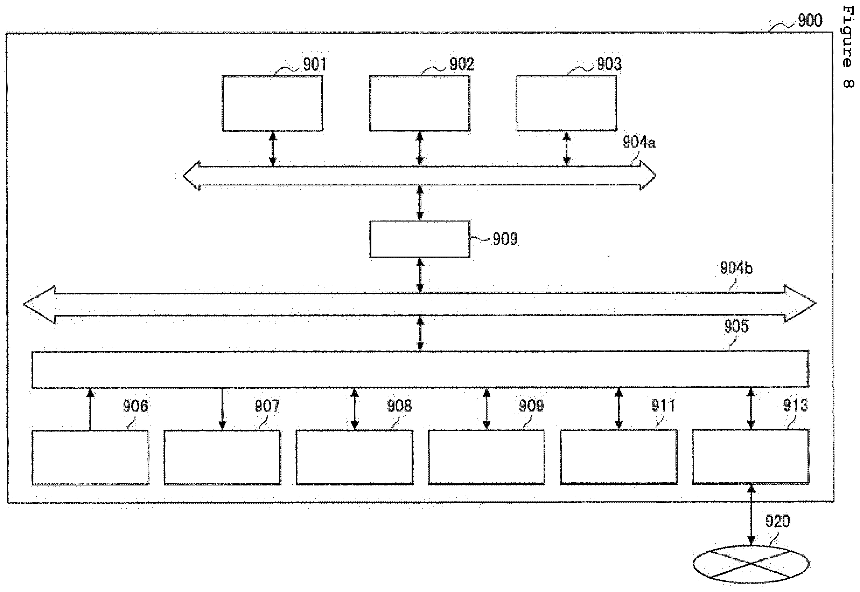

The hardware configuration of the information processing device according to the present embodiment will be described with reference to Figure 8. Figure 8 is a block diagram illustrating an example of the hardware configuration of the information processing system 1 according to the present embodiment. It should be noted that the information processing device 900 illustrated in Figure 8 can realize the information processing system 1 illustrated in Figure 3, for example. The information processing performed by the information processing system 1 according to the present embodiment is realized through cooperation between software and the hardware described hereinafter.

As illustrated in Figure 8, the information processing device 900 is provided with a CPU (Central Processing Unit) 901, a ROM (Read Only Memory) 902, a RAM (Random Access Memory) 903, and a host bus 904a. The information processing device 900 is also provided with a bridge 904, an external bus 904b, an interface 905, an input device 906, an output device 907, a storage device 908, a drive 909, a connection port 911, and a communication device 913. The information processing device 900 may include, instead of or in conjunction with the CPU 901, a processing circuit such as an electric circuit, a DSP (Digital Signal Processor), or an ASIC (Application Specific Integrated Circuit).

The CPU 901 functions as an arithmetic processing device and a control device, and controls the overall operation within the information processing device 900 in accordance with various programs. Further, the CPU 901 may be a microprocessor. The ROM 902 stores programs, computation parameters and the like used by the CPU 901. The RAM 902 temporarily stores programs used in the execution of the CPU 901, and parameters and the like that vary as appropriate during said execution. The CPU 901 can, for example, execute the functions of the information processing device 100 or the information processing terminal 300 illustrated in Figure 2.

The CPU 901, the ROM 902, and the RAM 903 are connected to one another by means of the host bus 904a, which includes a CPU bus and the like. The host bus 904a is connected to the external bus 904b, such as a PCI (Peripheral Component Interconnect/Interface), by way of the bridge 904. The host bus 904a, the bridge 904, and the external bus 904b do not necessarily need to be configured separately, and the functions thereof may be implemented using a single bus.

The input device 906 is realized by means of a device into which the user inputs information, such as a mouse, a keyboard, a touch panel, a button, a microphone, a switch, or a lever. Further, the input device 906 may be a remote control device employing infrared light or other radio waves, for example, or may be an externally connected appliance such as a mobile telephone or a PDA (Personal Digital Assistant) supporting manipulation of the information processing device 900. In addition, the input device 906 may include an input control circuit or the like which generates an input signal on the basis of information input by the user using the input means described hereinabove, and which outputs the input signal to the CPU 901. By manipulating the input device 906, the user of the information processing device 900 can input various types of data into the information processing device 900 and instruct the information processing device 900 to perform a processing operation. The input device 906 may correspond to the input unit 330 of the information processing terminal 300 illustrated in Figure 2.

The output device 907 is formed using a device capable of visually or audibly notifying the user of acquired information. Examples of such devices include display devices such as a CRT (Cathode Ray Tube) display device, a liquid crystal display device, a plasma display device, an EL (electroluminescence) display device, a laser projector, an LED projector, or a lamp, and audio output devices such as a speaker or headphones. The output device 907 outputs results obtained by means of various types of processing performed by the information processing device 900, for example. More specifically, the output device 907 visually displays the results obtained by means of various types of processing performed by the information processing device 900, in various formats such as text, images, tables, or graphs. Meanwhile, if an audio output device is being used, an audio signal comprising reproduced sound data, acoustic data or the like is converted into an analog signal and is output audibly. The output device 907 can, for example, execute the functions of the display unit 320 of the information processing terminal 300 illustrated in Figure 2.

The storage device 908 is a data storage device formed as an example of the storage unit of the information processing device 900. The storage device 908 is realized, for example, by means of a magnetic storage device such as an HDD (Hard Disk Drive), a semiconductor storage device, an optical storage device, or a magneto-optical storage device. The storage device 908 may include, for example, a storage medium, a recording device for recording data onto the storage medium, a reading device for reading data from the storage medium, and a deleting device for deleting data recorded on the storage medium. The storage device 908 stores programs executed by the CPU 901, various types of data, and various types of data acquired from the outside, for example. The storage device 908 can execute the functions of the storage unit 120 of the information processing device 100 illustrated in Figure 2, for example.

The drive 909 is a reader/writer for a storage medium, and is built into the information processing device 900 or is attached externally thereto. The drive 909 reads information recorded on a removable storage medium that has been mounted therein, such as a magnetic disk, an optical disk, a magneto optical disk, or semiconductor memory, and outputs the information to the RAM 903. The drive 909 can also write information to the removable storage medium.

The connection port 911 is an interface that connects to an external appliance, and, for example, is a port for connecting to an external appliance capable of transferring data by means of a USB (Universal Serial Bus) or the like.

The communication device 913 is a communication interface that is formed using a communication device for connecting to a network 920, for example. The communication device 913 is a communication card or the like for a wired or wireless LAN (Local Area Network), LTE (Long Term Evolution), Bluetooth (registered trademark), or WUSB (Wireless USB), for example. Further, the communication device 913 may be an optical communication router, a router for ADSL (Asymmetric Digital Subscriber Line), or a modem for various types of communication, for example. The communication device 913 can transmit and receive signals or the like to and from the internet or another communication appliance in accordance with a predetermined protocol such as TCP/IP, for example. The communication device 913 can, for example, execute the functions of the communication unit 220 of the cultivation sensor 200 or the communication unit 310 of the information processing terminal 300 illustrated in Figure 2.

It should be noted that the network 920 is a wired or wireless transmission path for information sent from devices connected to the network 920. For example, the network 920 may include a public network such as the internet, a telephone network, or a satellite communication network, or various types of LAN (Local Area Network) or WAN (Wide Area Network), including Ethernet (registered trademark). Further, the network 920 may include a dedicated network such as an IP-VPN (Internet Protocol - Virtual Private Network).

Further, in the information processing device 900, a computer program can also be created to cause the hardware such as the CPU, the ROM and the RAM built into the information processing system 1 to exhibit the same functions as each component of the information processing system 1 according to the present embodiment discussed hereinabove. Further, a recording medium having said computer program stored thereon is also provided.

### 5. Modified example

In the present embodiment, the present invention was described in terms of a main example for estimating the damage occurrence risk with respect to a crop. The present invention is not limited to said example, and can also be used when estimating the risk of occurrence of pests or rats, by identifying the effects of an insecticide or a rodenticide.

Besides the effect of killing pests that have developed, the effects of insecticides may also include the effect of preventing an outbreak of pests. Applying the present invention enables the pest occurrence risk to be estimated taking into account the effects of dispersing the drug.

Further, rodenticides may similarly have the effect of preventing vermin, in addition to the effect of killing vermin, in relation to animals such as rats. Applying the present invention enables the vermin occurrence risk to be estimated in consideration of the effects of dispersing the drug.

Furthermore, besides insects and animals, it is also possible to estimate the damage occurrence risk or the like resulting from pathogens and the like in the body of humans, for example, taking into account the effect of drugs that have been administered.

A preferred embodiment of the present invention has been described in detail hereinabove with reference to the accompanying drawings, but the present invention is not limited to said example. It is clear that a person having an ordinary level of knowledge in the technical field of the present invention could conceive of various variations or modifications within the scope of the technical concepts recited in the scope of the patent claims, and it is to be understood that these are of course also included within the technical scope of the present invention.

### Reference Signs List

- 100: Information processing device
- 110: Acquiring unit
- 120: Storage unit
- 130: Identifying unit
- 140: Machine learning unit
- 150: Estimating unit
- 200: Cultivation sensor
- 210: Sensor unit
- 220: Communication unit
- 300: Information processing terminal
- 310: Communication unit
- 320: Display unit
- 330: Input unit
- 400: Weather server

## Claims

1. An information processing device provided with: a storage unit which, for a plurality of drugs, stores drug information indicating the drug effects over time that are obtained by using the drugs;
an identifying unit for identifying the effect of a specified drug on a phenomenon of interest at a target time, if the specified drug is used at a specified time, on the basis of the drug information for the specified drug that is stored in the storage unit; and
an estimating unit for estimating the damage occurrence risk due to the phenomenon of interest at the target time, on the basis of the effect of the specified drug identified by the identifying unit.

2. The information processing device as claimed in claim 1, wherein the drug information indicates the magnitude of the drug effect at times before or after the drug is used, and
the identifying unit identifies the magnitude of the effect of the specified drug with respect to the phenomenon of interest at the target time.

3. The information processing device as claimed in claim 1 or 2, wherein the estimating unit estimates the damage occurrence risk due to the phenomenon of interest at the target time, using an estimation model obtained by means of machine learning employing a usage record of the specified drug, and a record of damage that occurred as a result of the phenomenon of interest.

4. The information processing device as claimed in any one of claims 1 to 3, wherein the drug is an agricultural chemical, and the phenomenon of interest is that a crop is infected with a disease.

5. The information processing device as claimed in claim 4, wherein the estimating unit estimates the damage occurrence risk due to the phenomenon of interest at the target time, on the basis of environmental information indicating the crop environment at the target time, in addition to the magnitude of the effect of the specified drug with respect to the phenomenon of interest at the target time.

6. A program for causing a computer to function as:
an identifying unit for identifying the effect of a specified drug with respect to a phenomenon of interest at a target time, if the specified drug is used at a specified time, on the basis of the drug information that corresponds to the specified drug and that indicates the drug effects over time that are obtained by using the specified drug; and
an estimating unit for estimating the damage occurrence risk due to the phenomenon of interest at the target time, on the basis of the effect of the specified drug identified by the identifying unit.

7. An information processing device provided with: a storage unit which, for a plurality of drugs, stores drug information indicating the drug effects over time that are obtained by using the drugs;
an identifying unit for identifying, on the basis of a drug usage record indicating which drug was used and when, and the drug information relating to the drug, the effect of the drug with respect to a phenomenon of interest at a target time; and
a learning unit for generating an estimation model for estimating the damage occurrence risk due to the phenomenon of interest, by means of machine learning employing the effect of the drug identified by the identifying unit, and a record of damage that occurred as a result of the phenomenon of interest at the target time.

8. The information processing device as claimed in claim 7, wherein the drug information indicates the magnitude of the drug effect at times before or after the drug is used, and
the identifying unit identifies the magnitude of the effect of the drug with respect to the phenomenon of interest at the target time.

9. The information processing device as claimed in claim 7 or 8, wherein the drug is an agricultural chemical, and the phenomenon of interest is that a crop is infected with a disease.

10. The information processing device as claimed in claim 7 or 8, wherein the learning unit performs the machine learning on the additional basis of environmental information indicating the crop environment at the target time.

11. A program for causing a computer to function as:
an identifying unit for identifying, on the basis of a drug usage record indicating which drug was used and when, and drug information which relates to the drug and which indicates the drug effects over time that are obtained by using the drug, the effect of the drug with respect to a phenomenon of interest at a target time; and
a learning unit for generating an estimation model for estimating the damage occurrence risk due to the phenomenon of interest, by means of machine learning employing the effect of the drug identified by the identifying unit, and a record of damage that occurred as a result of the phenomenon of interest at the target time.
